# EUROPEAN PATENT APPLICATION

(11) **EP 1 985 399 A1**
(43) Date of publication of application: **29.10.2008**
(21) Application number: 07107074.2
(22) Date of filing: 27.04.2007
(51) Int. Cl.: B23H 7/10

(54) **Current conductor for a wire electrode of an electro-erosion machine**

(71) Applicant: CHARMILLES TECHNOLOGIES S.A., 1217 Meyrin 1 (CH)
(72) Inventor: Grandjean, Michel Marcel Robert, 1233 Lully/Bernex (CH)
(74) Representative: Weiss, Wolfgang

(57) **Abstract**

A current conductor (1) for a wire electrode (W) of an electro-erosion machine is proposed, comprising a pair of driving rollers (7) which are arranged coplanarly perpendicular to and rotatably around horizontal axes (Y) as well as at a distance equal to the thickness of the wire for driving the wire electrode through a machining zone of the electro-erosion machine, where the two driving rollers (7) are identical and arranged symmetrically with respect to the wire (W) and where the at least one current conductor (1) is in electrical contact with a cylindrical surface (8) of the driving rollers (7).

## Description

The present invention is related to a current conductor for a wire electrode of an electro-erosion machine, comprising a pair of driving rollers which are arranged coplanarly perpendicular to and rotatably around horizontal axes as well as at a distance equal to the thickness of the wire for driving the wire electrode through a machining zone of the electro-erosion machine.

In an electric discharge machine a conducting wire is used as a moving or travelling tool to machine a metal work piece by means of electro-erosion. The wire may have a thickness of less than a millimeter and is moving at a constant speed of several meters per minute. The wire is moved at a narrow and constant distance in parallel to the work piece to be machined. A constant distance is very important for the surface quality of the machined work piece and therefore the wire has to run under a certain mechanical tension as well.

For connecting the tensioned running wire to the source of machining current several methods of slidingly contacting the running wire are known. Friction between the moving wire and the fixed electric contact terminal leads to wear at one of both conducting parts being composed of the softer material. This current conductor has to be replaced at regular intervals. The replacement procedure leads to machine downtime and may be a rather complex task.

In JP 55-16512 U there is disclosed a current conducting assembly for a travelling wire electrode in an electro-erosion machine. A brush block is electrically connectable to a source of the machining current and is adapted to be in electrical contact with a flank of one of two coplanar rollers or wheels for guiding and transporting the wire electrode. The two rollers have a different construction. The first roller which is contacted by the brush block has a radial groove for guiding the wire and for increasing the contact area between the roller and the wire. The second roller is needed solely for transferring sufficient pressure to the travelling wire. This pressing roller is composed of an elastomeric material.

Based on this prior art it is an object of the invention to specify a current conductor for a wire electrode of an electro-erosion machine that can be replaced without mistakes and in the shortest possible time. Also wear of the conductor should be as predictably as possible, so that only a replacement has to be made at the exact end of the service lifetime of the conductor. Wear and movement of the wire electrode itself should be as small as possible.

The foregoing object is achieved by a current conductor for a wire electrode of an electro-erosion machine, comprising a pair of driving rollers which are arranged coplanarly perpendicular to and rotatably around horizontal axes as well as at a distance equal to the thickness of the wire for driving the wire electrode through a machining zone of the electro-erosion machine, where the two driving rollers are identical and arranged symmetrically with respect to the wire and where the at least one current conductor is in electrical contact with the cylindrical surface of the driving rollers.

It is advantageous that the current flowing from the power source to the two driving rollers is well balanced. This is achieved by the fact that two identical current conductors are arranged in electrical contact with the cylindrical surface of both driving rollers. This also means that two conductors have to be replaced simultaneously.

It is also advantageous that the wear of the conductor can be visually checked by the operator without removing any parts. This is achieved by the fact that each conductor comprises a pair of narrow grooves arranged symmetrically compared to the symmetry plane of the conductor. The narrow grooves are arranged in a vertical direction and in parallel to the Y-Z plane of the arrangement of the driving rollers.

Further more it is advantageous that the assembly and disassembly of the conductors is as easy and reliably as possible. The conductors should be mounted at a well defined position with respect to the driving rollers and under a well defined and constant contact pressure with respect to the driving rollers. This is achieved by the fact that the current conductor comprises a slot having a bottom of half cylindrical shape, where the slot is arranged in parallel to the Z-axis along the median of the current conductor. This is also achieved by the fact that the current conductor has two recesses arranged symmetrically with respect to the median, where the recesses are arranged in parallel to the Z-axis.

An exemplary embodiment of the invention is described with reference to the figures. In the drawing:
FIG. 1 shows a perspective view of a current conductor according to the invention,
FIG. 2 shows a side view of the current conductor of FIG. 1,
FIG. 3 shows a top view of the current conductor of FIG. 1,
FIG. 4 shows a perspective view of a mounting device for the current conductor of FIG. 1,
FIG. 5 shows a perspective partial view of an electro-erosion machine of prior art, where the current conductor of FIG. 1 can be replaced and
FIG. 6 shows an explosive view of the electro-erosion machine as shown in FIG 5.

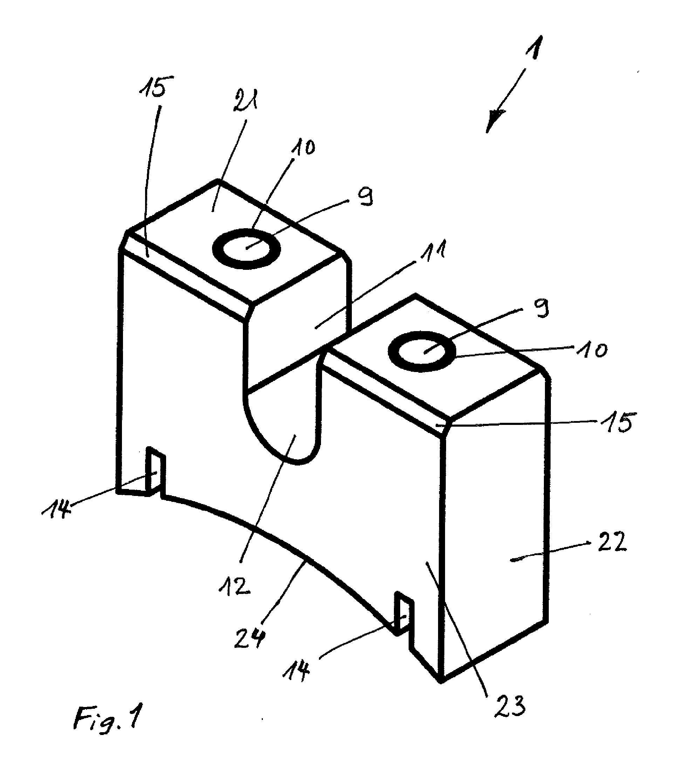

Figures 1, 2 and 3 show respectively a perspective view, a side view and a top view of a current conductor 1 for an electro-erosion machine, according to the present invention. The current conductor 1, also known as a brush block 1, is used for transferring the current from the current source to the wire electrode of the electro-erosion machine. The brush block 1 is essentially a block having a flat top surface 21, flat sides 22, 23 and a curved bottom face 24, where the curvature of the bottom face 24 is equal to the curvature of the driving rollers of the electro-erosion machine.

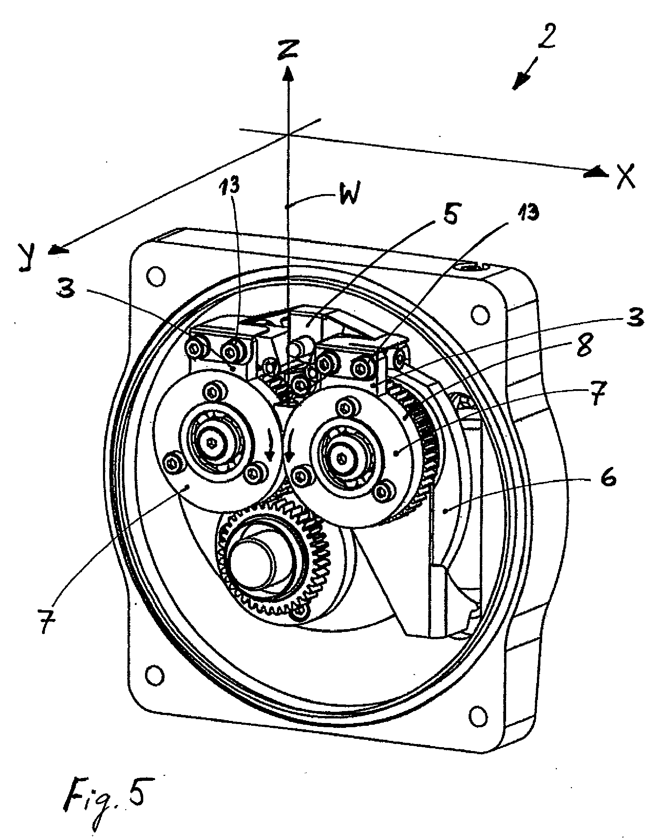

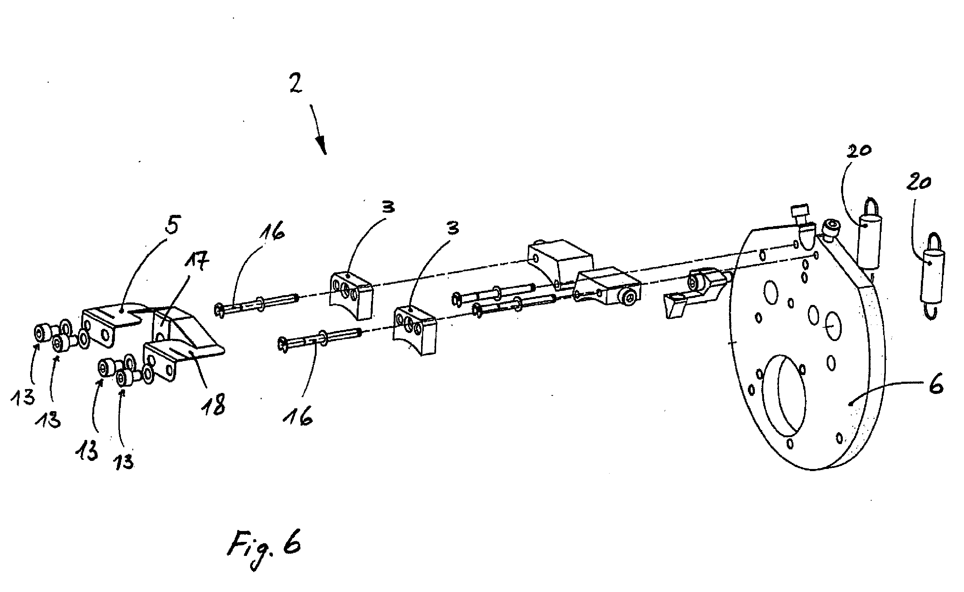

Figures 5 and 6 show a portion of an electro-erosion machine 2, where an existing current conductor 3 may be replaced by the current conductor 1 of Fig. 1, 2 and 3. Both current conductors 1, 3 are held in place by a mounting clamp 4, 5, which serves as a current conducting and mounting device 4, 5 for the electro-erosion current from the current source to the wire electrode.

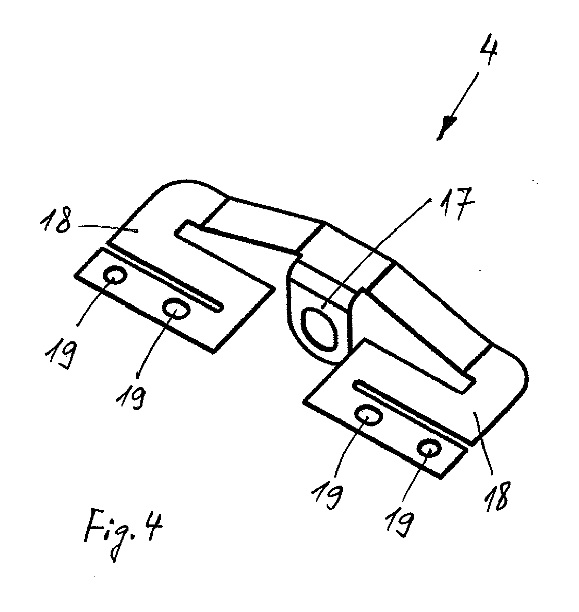

Fig. 4 and Fig. 5 respectively show two different mounting clamps 4, 5 for mounting the respective brush blocks 1, 3 to an existing ground plate 6 of the electro-erosion machine 2. The first mounting clamp 4 of Fig. 4 is adapted to be assembled with the brush block 1 of the present invention. The second mounting clamp 5 of Fig. 5 is designed to be assembled with the brush block 5 of prior art. As a consequence of the new design of the mounting clamp 4 together with the brush block 1, the extraction and disassembly of the brush block 1 becomes easier, less complicated and less time consuming.

In Figure 5 there is shown two driving rollers 7. The two identical driving rollers 7 are arranged in the same plane, in parallel to the ground plate 6 and are arranged at a narrow distance with respect to each other. The distance between the two driving rollers 7 is equal to the thickness of the wire electrode. The wire electrode is driven downward along the Z-axis by the movement of the two driving rollers 7, both rotating about axes parallel to the Y-axis of the arrangement. The wire electrode being rather thin, the straight line Z can be supposed to be a representation of a wire W. Arrows on the driving rollers 7 in Fig. 5 show the respective senses of rotation. The cylindrical surface 8 of each driving roller 7 is in sliding contact with the curved bottom face 24 of the current conductors 1, 3. Comparison of Fig. 5 and 6 with Fig. 1 through 4 clearly shows the improvement of the present invention over prior art.

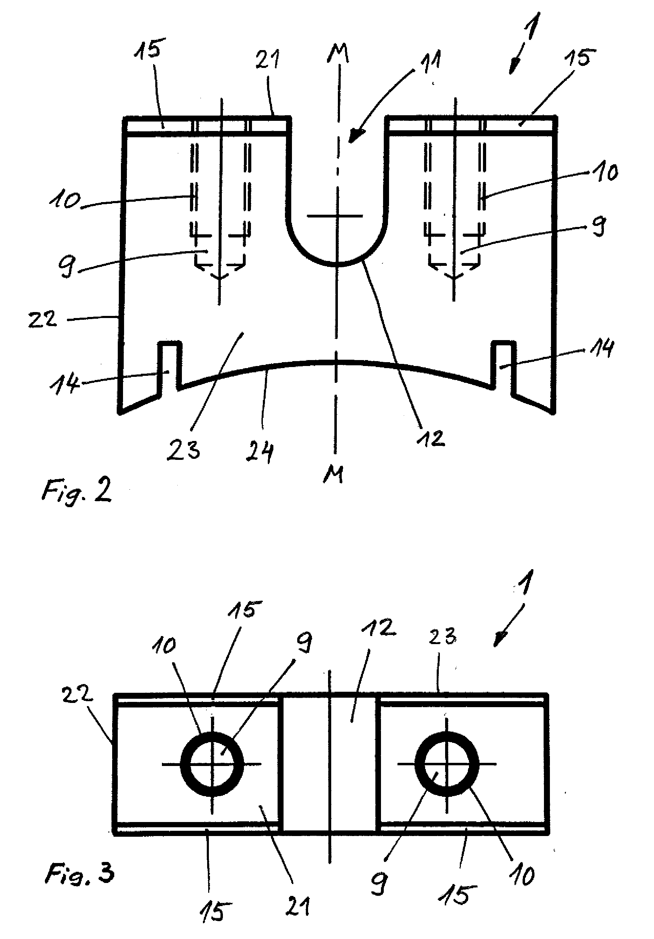

As can be seen from Fig. 2, the brush block 1 has two recesses 9, bored from the top side 21, with a thread 10 on the inner side of the recess. The recesses 9 are arranged symmetrically with respect to the median M of the brush block 1. Also these threaded recesses 9 are arranged in parallel to the Z-axis of the arrangement and therefore perpendicular to the axes of the driving rollers 7. The threaded recesses 9 are used for mounting the brush block 1 to the mounting clamp 4 by means of fastening bolts 93. These fastening bolts 13 are of the same size and material as the fastening bolts of prior art, shown in Fig. 5 and 6.

As can be seen from Fig. 4 in comparison with Fig, 5 and 6, the mounting clamp 4 has a middle portion 17 for fixing the mounting clamp 4, 5 to the ground plate 6. On both sides of the middle portion 17 the mounting clamp has two arms 18, to which a current conductor or brush block 1, 3 can be mounted. Each arm 18 has two passages 19 for taking up the fastening bolts 13 and for fastening the two brush blocks 1. Because the passages 19 are stamped or die-cut in a horizontal portion of the mounting clamp 4 in stead of the vertical portion as shown in prior art of Fig. 5 and 6, replacement of the brush block 1 is facilitated. The brush block 1 can be replaced without removing the mounting clamp 4 from the ground plate 6.

The current conductor or brush block 1 also has, along the median M of the brush block 1, a slot 11, which is open to the top side 21 of the brush block 1. This slot 11 has a bottom 12 in the shape of a half cylinder. The slot 11 is used for positioning the brush block 1 in a precisely reproducible position with respect to the curved outer surface 8 of the driving rollers 7 by means of a positioning stem 16, having a diameter of about the same size as the width of the slot 11. Because the slot 11 is open to the top side 21, this positioning stem 16 can be of the same size as the positioning stem 16 of prior art, but it does not necessarily have to be unscrewed from the ground plate 6 for every replacement of the brush block 1.

On the curved bottom face 24 of the brush block 1 two further rather narrow and identical rectangular slots 14 can be seen, also arranged symmetrically with respect to the median M of the brush block 1. These narrow slots 14 are slit in a sense in parallel with the Y-axis of the arrangement and act as a wear indicator. During the service lifetime of the brush block 1 the slots 14 will slowly diminish in length, until a certain point in time, when no light may pass through the slots 14 from rear to front. Therefore the operator can visually check the state of wear of the brush block 1 during the service lifetime.

The top surface 21 of the brush block 1 has chamfers 15 in order to eliminate sharp edges and for facilitating extraction and reassembly of the brush block 1.

The brush block 1 is made of a material that is good for conducting current to the driving rollers 7 of the electro-erosion machine 2 and in the same time optimal for transferring current by means of friction, e.g. a sintered amalgam of copper and tungsten. The mounting plate 4 is made of a flexible metal plate, e.g. brass.

In order to press the brush block 1 with a constant frictional force against the cylindrical surface 8 of the driving rollers 7 two springs 20 for each brush block 1 are fixed at the rear side of the ground plate 6.

In order not to unbalance the currents towards each driving roller 7, it is necessary to replace both brush blocks 1 simultaneously, when they are worn out.

The replacement of the brush block 1 no longer needs disassembly of the whole arrangement of ground plate 6, driving rollers 7 and the mounting clamp 4. The replacement will take less machine downtime and has to be done only, when clearly indicated by the state of the wear indicating slots 14.

## Claims

1. Current conductor (1) for a wire electrode (W) of an electro-erosion machine, comprising a pair of driving rollers (7) which are arranged coplanarly perpendicular to and rotatably around horizontal axes (Y) as well as at a distance equal to the thickness of the wire for driving the wire electrode through a machining zone of the electro-erosion machine, **characterized in that** the two driving rollers (7) are identical and arranged symmetrically with respect to the wire (W) and that the at least one current conductor (1) is in electrical contact with a cylindrical surface (8) of the driving rollers (7).

2. Current conductor (1) as claimed in Claim 1, **characterized in that** the current conductor (1) is a brush block (1) having a flat top surface (21), flat side faces (22, 23) and a curved bottom face (24) having a curvature corresponding to the curvature of the cylindrical surface (8) of the driving rollers (7).

3. Current conductor (1) as claimed in at least one of Claims 1 or 2, **characterized in that** the brush block (1) has a slot (11) slit along the median (M) of the brush block (1), where the slot (11) is open to the top surface (21) of the brush block (1) and ends in a half-cylindrically shaped bottom (12) for taking up a positioning stem (16).

4. Current conductor (1) as claimed in at least one of Claims 1 to 3, **characterized in that** the brush block (1) has two threaded recesses (9) arranged symmetrically with respect to the median (M) and running from the top surface (21) in a sense in parallel with the wire (W).

5. Current conductor (1) as claimed in at least one of Claims 1 to 4, **characterized in that** the brush block (1) has two further narrow slots (14) slit in the curved bottom face (24).

6. Current conductor (1) as claimed in at least one of Claims 1 to 5, **characterized in that** the brush block (1) has chamfers (15) between the top face (21) and the side faces (22,23).

7. Current conductor (1) as claimed in at least one of Claims 1 to 6, **characterized in that** the brush block (1) is replaceably arranged with respect to a mounting clamp (4), where the mounting clamp (4) has passages (19) for fastening bolts (13) fitting in the recesses (9) on the top side (21) of the brush block (1).

8. Current conductor (1) as claimed in at least one of Claims 1 to 7, **characterized in that** the brush block (1) consists of a sintered amalgam of copper and tungsten.
